# EUROPEAN PATENT APPLICATION

(11) **EP 2 322 844 A1**
(43) Date of publication of application: **18.05.2011**
(21) Application number: 09817620.9
(22) Date of filing: 07.09.2009
(51) Int. Cl.: F21S 2/00, G02F 1/13357, F21Y 101/02

(54) **ILLUMINATING DEVICE AND LIQUID CRYSTAL DISPLAY DEVICE**

(30) Priority: 30.09.2008 JP 2008254405
(71) Applicant: Sharp Kabushiki Kaisha, Osaka-shi, Osaka 545-8522 (JP)
(72) Inventor: MOURI, Hirokazu, Osaka 545-8522 (JP)
(74) Representative: Müller-Boré & Partner Patentanwälte
(86) International application number: PCT/JP2009/065576
(87) International publication number: WO 2010/038583

(57) **Abstract**

A backlight (2) of the present invention is a tandem backlight. This backlight (2) includes: a light source (5); a plurality of light emitting units (11) each including a light guide body (7) that diffuses light from the light source and causes the diffused light to exit from a light emitting surface; and a substrate (4) on which the light source (5) is fixedly connected and which is connected to the light guide body (7). On a surface of the light guide body (7) which surface faces the substrate (4), a protrusion (12) for alignment with the substrate is formed. Meanwhile, in the substrate (4), a through hole (13) into which the protrusion (12) is engaged is formed. An engaging section B (alignment section) of the protrusion (12) and the through hole (13) is disposed so as to be closer to a light emitting section (7b) than the connecting area A of the light guide body (7) and the substrate (4). According to the present invention, in a tandem illumination device, highly precise alignment of the light source and the light guide body can be performed. As a result, luminance uniformity can be improved. In addition, a defect in mounting of the light guide body can be easily distinguished.

## Description

### Technical Field

The present invention relates to an illumination device that is to be used as a backlight of a liquid crystal display device and the like, and a liquid crystal display device including this illumination device.

### Background Art

In recent years, liquid crystal display devices have been rapidly spreading in place of cathode ray tubes (CRTs). Such liquid crystal display devices have energy-saving, thin, lightweight, and the like characteristics and widely used for a thin television, a monitor, a mobile phone, and the like. One method of a method for further exploiting these characteristics is to improve an illumination device provided on a backside of the liquid crystal display device.

The illumination device is generally categorized into a direct type and an edge-light type. In a direct illumination device, a linear light source such as a cold cathode tube or a hot cathode tube is provided on a back side of a liquid crystal panel, or a plurality of point light sources such as light emitting diodes or the like are provided in parallel lines. Light emitted from such a light source is directly supplied onto the liquid crystal panel. Due to this structure, the direct type illumination device makes it easy to obtain a high luminance even in the case of a large screen, and is mainly employed as a backlight of a large liquid crystal display whose size is 20 inches or more.

Meanwhile, in an edge-light illumination device, a light guide body is provided on a back side of a liquid crystal panel and a light source is provided at a side edge section. Light emitted from this light source is reflected by the light guide body and indirectly supplied onto the liquid crystal panel. A positional relation between the light source and the light guide body is determined by alignment according to a shape of a housing. Particularly, in some illumination devices for recent mobile phones, the positional relationship between the light source and the light guide body is determined by alignment with use of double-face adhesive tape in addition to alignment according to the shape of the housing. This configuration allows the edge-light illumination device to be thinner and to have an excellent uniform luminance though the edge-light illumination device has a low luminance. Accordingly, the edge-light illumination device is mainly used as a backlight for middle-size to small-size displays of, for example, mobile phones or laptop computers.

In such background circumstances, recently, a tandem illumination device is disclosed (See Patent Literature 1, for example). In the tandem illumination device, a plurality of light guide bodies are provided on a back side of a liquid crystal panel so that the plurality of light guide bodies overlap each other. This structure makes it possible to obtain an illumination device that has both (i) an advantage of the direct illumination device (i.e., realization of a higher luminance and a larger size) and (ii) an advantage of the edge-light illumination device (i.e., realization of a thinner body).

### Citation List

### [Patent Literature]

### [Patent Literature 1]

Japanese Patent Application Publication, *Tokukai,* No. 2001-312916 (published on November 9, 2001)

### Summary of Invention

### Technical Problem

In a tandem illumination device, a positional relation between a light source and a light guide body has a great influence on brightness of the illumination device. For example, in a case where the light source and the light guide body are provided so as to be very close to each other, input efficiency of light to the light guide body is improved. As a result, an illumination device having a preferable light utilization efficiency can be obtained. On the other hand, in a case where the light source and the light guide body are provided so as to be a little apart from each other, the input efficiency of light to the light guide body lowers. As a result, brightness of the illumination device lowers. This problem becomes more prominent if the light source and the light guide body are arranged to be further apart from each other.

Further, in the tandem illumination device, a plurality of light guide units each including a combination of a light source and a light guide body are arranged in lines so as to overlap each other, and thereby a large illumination device is obtained. Accordingly, in a case where a plurality of light guide units each having a different positional relationship between the light source and the light guide body are provided in lines so as to overlap each other, brightness varies in each light guide unit. As a result, luminance uniformity of the illumination device seriously deteriorates.

Further, the tandem illumination device employs a mounting technique, according to which, while a light guide body is being aligned, the light guide body is fixed on a substrate on which a light source is fixedly provided. However, in the current configuration, it is difficult to distinguish a case where the light guide body is mounted on the substrate in a defective manner from a case where the light guide body is mounted on the substrate in a preferable manner. As a result, manufacturing of a product is completed while the light guide body is defectively mounted on the substrate.

The present invention is attained in view of above problems. An object of present invention is to provide a tandem illumination device that allows highly precise alignment of a light source and a light guide body so as to improve luminance uniformity and that also makes it possible to easily distinguish a defect in mounting of the light guide body, by a well-devised method of fixing and aligning the light source and the light guide body.

### Solution to Problem

In order to solve the above problems, an illumination device of the present invention includes: a light source; a plurality of light emitting units each including a light guide body, the light guide body causing light from the light source to be diffused and emitted from a light emitting surface; and a substrate on which the light source is fixedly provided, the substrate being connected to the light guide body, the light guide body being provided in each of the plurality of light emitting units, the light guide body including: a light emitting section having the light emitting surface; and a light guide section for guiding the light from the light source to the light emitting section, the plurality of light emitting units being arranged in lines so that a light emitting section of one light guide body comes above a light guide section of another light guide body adjacent to the one light guide body, the light guide body having a protrusion for alignment with respect to the substrate, the protrusion being formed on a surface of the light guide body which surface faces the substrate, the substrate having a hole or depression formed, the protrusion being engaged in the hole or depression at an engaging section, the engaging section of the protrusion and the hole or depression being provided in a position that is closer to the light emitting section of the light guide body than a connecting area for connection between the light guide body and the substrate.

The illumination device of the present invention is a so-called tandem illumination device. In the illumination device of the present invention, the light source is fixedly disposed on the substrate, and the substrate and the light guide body are connected by use of, for example, a pin for connection in the connecting area. Further, on a surface of the light guide body which surface faces the substrate (this surface is also called a back surface of the light guide body), a protrusion for alignment is provided. In the substrate a hole or depression into which the protrusion is engaged is formed. An engaging section of the protrusion and the hole or depression is provided so as to be closer to the light emitting section of the light guide body than an area (connecting area) at which the light guide body and the substrate are connected (i.e., in a position in a light emitting direction of the light source, with respect to the connecting area).

According to the above configuration, while alignment is being performed by engaging the protrusion for alignment into the hole or depression, the substrate and the light guide body can be connected. Accordingly, precise alignment and disposition of the light guide body is possible on the substrate on which the light source is provided. Therefore, for example, by highly precise alignment of each member in a position at which light emitting efficiency is optimum, it is possible to realize an illumination device whose light emitting efficiency is high.

In addition, in the above configuration, the engaging section of the protrusion of the light guide body and the hole or depression formed on the substrate is disposed so as to be closer to the light emitting section of the light guide body than the connecting area of the light guide body and the substrate. That is, the engaging section is disposed so that a distance between the engaging section and the light emitting section is shorter than a distance between the connecting area and the light emitting section. As compared to a case where the engaging section is provided so that the engaging section is farther from the light emitting section of the light guide than the connecting section, the above configuration causes a top end section (a top end section that is farthest from the connecting section of the light guide body and the substrate) of the light emitting section of the light guide body to be lifted upward to a larger extent in a case where the protrusion is not correctly engaged in the hole or depression. Therefore, the above configuration makes it possible to easily distinguish a case where a defect in mounting occurs.

Preferably, the illumination device of the present invention is configured such that: in the connecting area for connection between the light guide body and the substrate, the light guide body and the substrate have through holes formed therethrough, respectively; and the light guide body and the substrate are connected by engaging a connection member for connecting the light guide body and the substrate into the through holes respectively formed in the light guide body and the substrate.

In the above configuration, positions of the light guide body and the substrate can be reliably fixed, and the light guide and the substrate can be connected. An example of the connection member is a pin for fixation or a screw.

Preferably, the illumination device of the present invention is configured such that: a number of the substrate provided for the plurality of light emitting units is one. That is, a plurality of light emitting units may be laid out on one substrate.

According to the above configuration, a plurality of light units can be aligned on one substrate. This makes it possible to prevent respective light emitting units from being misaligned relative to each other. As a result, luminance uniformity of the illumination device can be further improved. In addition, the above configuration makes it possible to reduce the number of substrates.

Preferably, the illumination device of the present invention is configured such that: the protrusion is provided to the light guide section of the light guide body.

Light traveling within the light guide body is influenced not a little by the presence of the protrusion. Accordingly, if the protrusion were provided to the light emitting section of the light guide body, a light emitting state in the vicinity of the protrusion would be different from other sections, which would result in uneven luminance.

According to the above configuration, the protrusion is provided to the light guide section. Accordingly, the light emitted from the light guide body is less influenced by the protrusion. This makes it possible to make a state of light emission from the light emitting section uniform.

Further, as compared to the light emitting section, the light guide section is provided closer to the connecting area of the light guide body and the substrate. When the engaging section of the protrusion and the hole (or depression) is disposed in a position closer to the connecting section, the top end section of the light emitting section of the light guide body (top end section farthest from the connecting section of the light guide body and the substrate) is lifted upward to a greater extent in a case where the protrusion of the light guide body is not correctly engaged in the hole or depression of the substrate. Therefore, according to the above configuration, it is possible to more easily distinguish a case where a defect in mounting occurs.

Preferably, the illumination device of the present invention is configured such that: the protrusion is provided in a position that is closer to an edge section of the light guide body than a center section of the light guide body.

According to the above configuration, an amount of light traveling within the light guide body is larger at a center section of the light guide body than at an edge section of the light guide body. Accordingly, by providing the protrusion in a position close to the edge section of the light guide body, it is possible to reduce an influence of the protrusion on the light traveling within the light guide body.

Preferably, the illumination device of the present invention is configured such that: the protrusion is plurally provided to one light guide body.

According to the above configuration, highly precise alignment of the light guide body on the substrate is possible. As a result, the light guide body and the light source fixedly provided on the substrate can be aligned more highly precisely.

Preferably, the illumination device of the present invention is configured such that: the hole is formed in the substrate into which hole the protrusion is engaged; and the protrusion has a length equal to or greater than a thickness of the substrate.

According to the above configuration, in a case where the protrusion of the light guide body is not correctly engaged in the hole of the substrate, a top of the light guide body is lifted upward to a greater extent. This produces a state in which a defect in mounting is visually observed more easily. Further, in the above configuration, it is difficult that the protrusion of the light guide body comes off from the hole of the substrate. Therefore, even in a case where it is forgotten to engage the connection member, the light guide body is prevented from coming off from the substrate.

Preferably, the illumination device of the present invention is configured such that: the depression is formed in the substrate into which depression the protrusion is engaged; and the protrusion has a length smaller than a depth of the depression.

According to the above configuration, in a state where the protrusion of the light guide body is engaged in the depression of the substrate, the light guide body is prevented from being lifted upward.

Preferably, the illumination device of the present invention is arranged such that: the light guide body has a hole into which the light source is engaged, the light source being fixedly provided on the substrate.

According to the above configuration, precise alignment of the light guide body and the light source is possible. Further, it is possible prevent misalignment of the light source.

A liquid crystal display device of the present invention includes, as a backlight, any one of the illumination devices described above.

According to the above configuration, the illumination device of the present invention is included as the backlight. This eliminates a case where the light guide body is defectively mounted. Therefore, it is possible to realize a liquid crystal display device excellent in luminance uniformity.

### Advantageous Effects of Invention

In an illumination device of the present invention, on a surface of the light guide body which surface faces the substrate, a protrusion for alignment with the substrate is formed. Meanwhile, in the substrate, a hole or depression into which the protrusion is engaged is formed. Further, an engaging section of the protrusion and the hole or depression is provided closer to the light emitting section of the light guide body as compared to the connecting area of the light guide body and the substrate.

According to the above configuration, in a tandem illumination device, highly precise alignment of the light source and the light guide body is possible. Accordingly, luminance uniformity can be improved. Further, it becomes possible to easily distinguish a defect in mounting of the light guide body.

Because the liquid crystal display device of the present invention includes the illumination device of the present invention, the liquid crystal display device of the present invention can improve luminance uniformity.

### Brief Description of Drawings

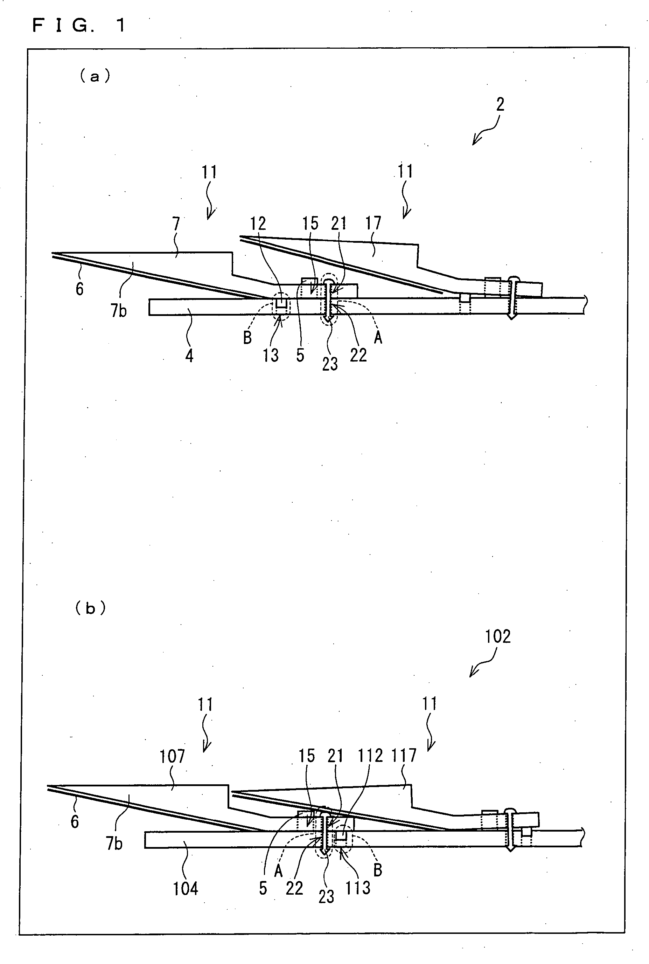

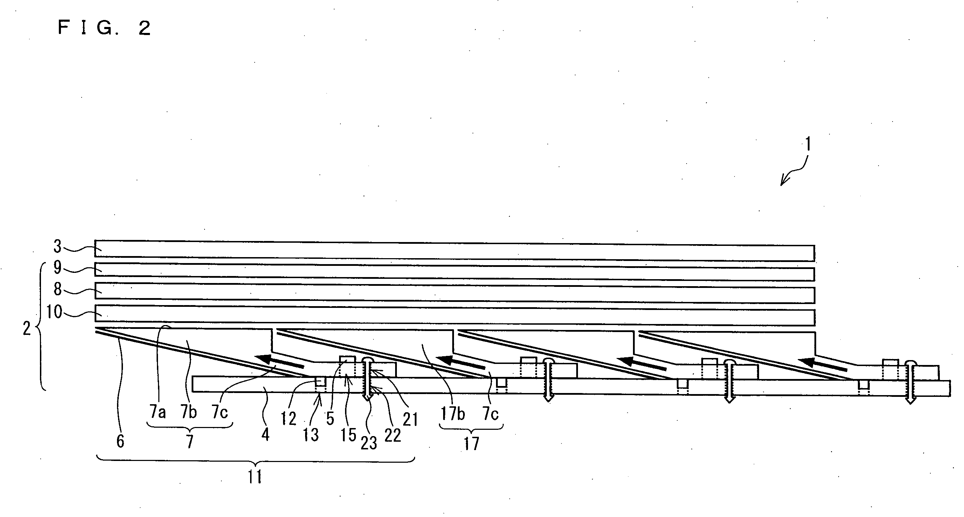

Fig. 1
   (a) of Fig. 1 is a side view illustrating a configuration of a part of a backlight provided in a liquid crystal display device shown in Fig. 2 and shows a state in which one of light guide bodies is defectively mounted; (b) of Fig. 1 is a side view illustrating a configuration of a part of a backlight of a comparative example of the present invention and shows a state in which one of light guide bodies is defectively mounted.
Fig. 2
   Fig. 2 is a cross sectional view illustrating a configuration of a liquid crystal display device according to one embodiment of the present invention.
Fig. 3

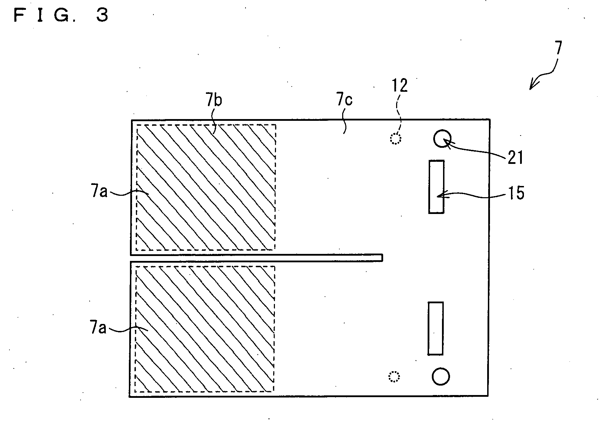

   Fig. 3 is a plan view illustrating a configuration of one of light guide bodies provided in the backlight of (a) of Fig. 1.
Fig. 4

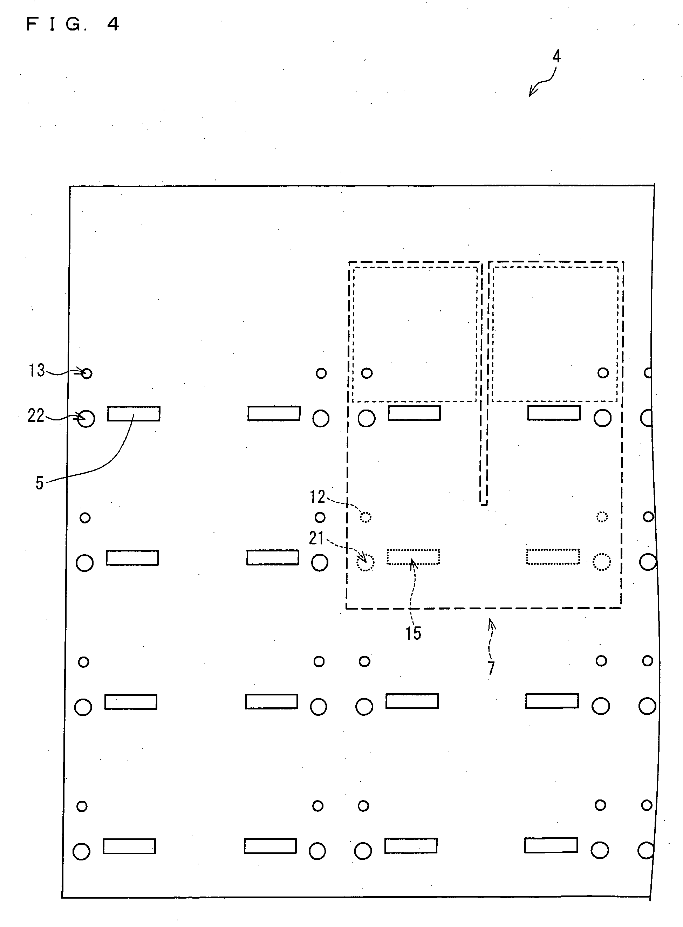

   Fig. 4 is a plan view illustrating a configuration of a part of a substrate provided in the backlight of (a) of Fig. 1.
Fig. 5

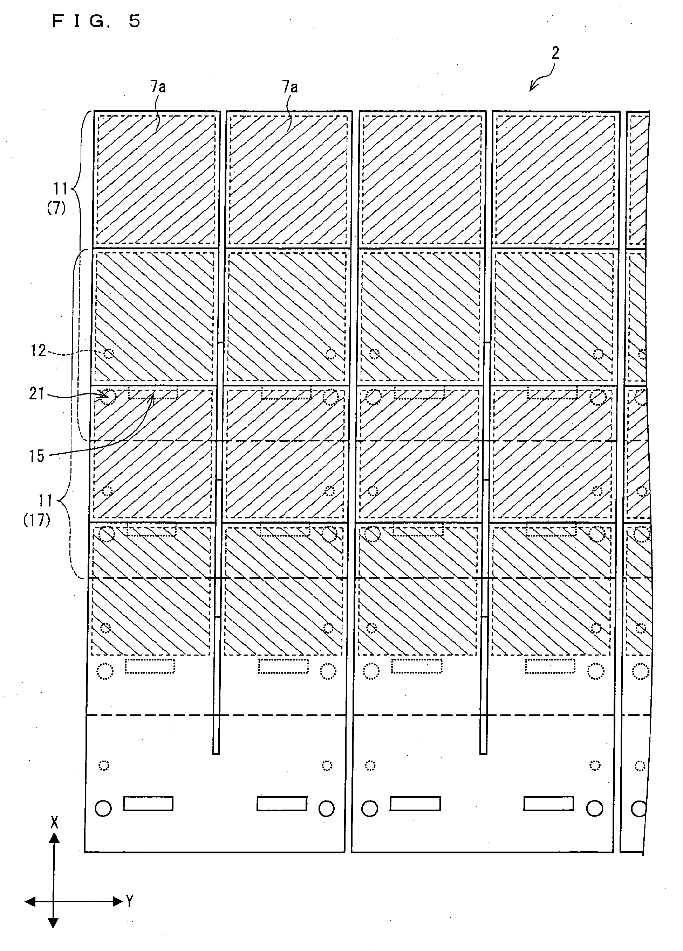

   Fig. 5 is a plan view illustrating a configuration of a part of the backlight of (a) of Fig. 1.
Fig. 6

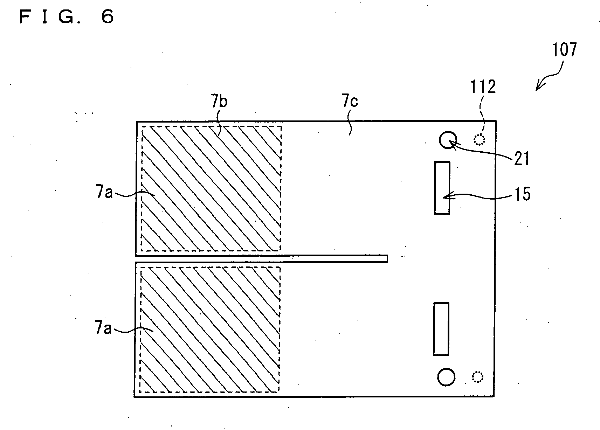

   Fig. 6 is a plan view illustrating a configuration of one of light guide bodies provided in the backlight of the comparative example as shown in (b) of Fig. 1.
Fig. 7

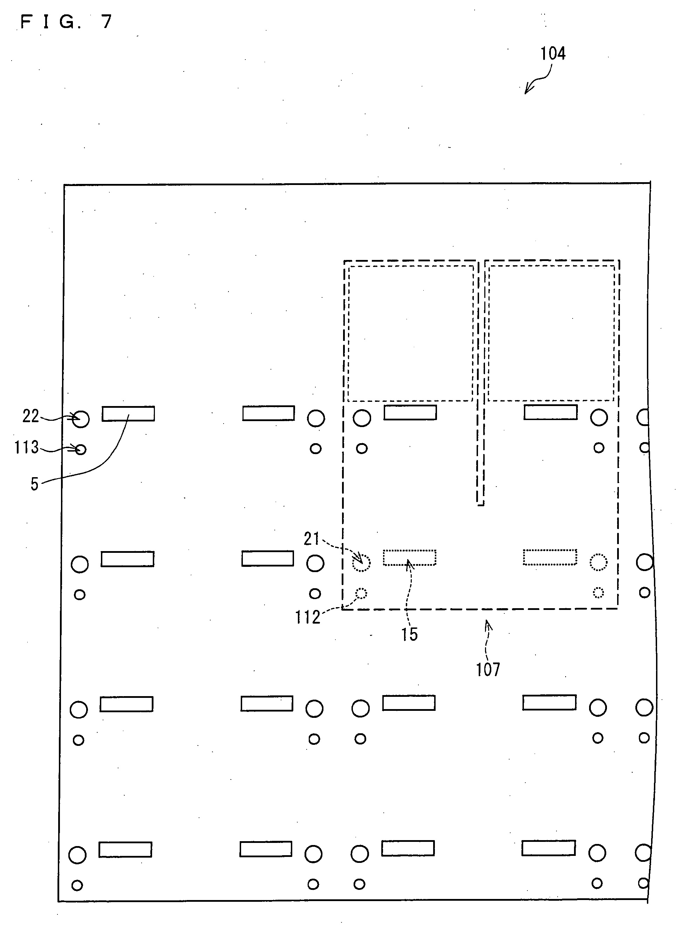

   Fig. 7 is a plan view illustrating a configuration of a part of a substrate of the backlight of the comparative example as shown in (b) of Fig. 1.
Fig. 8

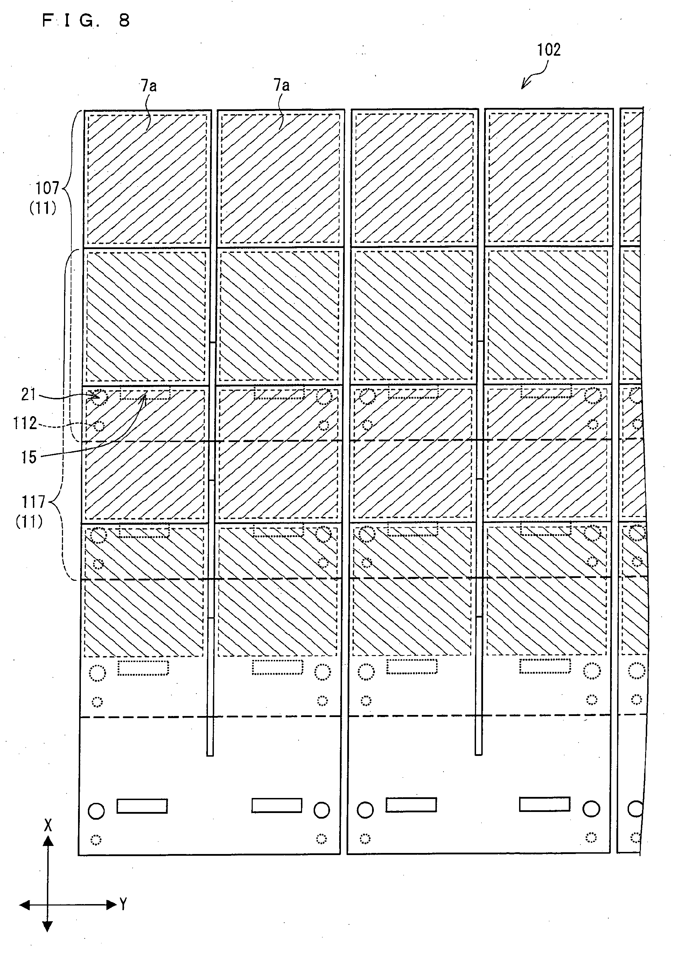

   Fig. 8 is a plan view illustrating a part of the backlight of the comparative example as shown in (b) of Fig. 1.

### Description of Embodiments

The following explains an embodiment of the present invention with reference to Figs. 1 to 8. Note that the present invention is by no means limited by the embodiment.

The present embodiment explains a tandem illumination device that includes a plurality of light-emitting units each including a combination of a point light source and a light guide body. Fig. 2 shows a configuration of a liquid crystal display device 1 in which a tandem illumination device is provided as a backlight.

The liquid crystal display device 1 includes a backlight 2 (illumination device) and a liquid crystal display panel 3. The liquid crystal display panel 3 is provided so as to face the backlight 2.

The liquid crystal display panel 3 is the same as general liquid crystal display panels that are used in conventional liquid crystal display devices. Though not illustrated, for example, the liquid crystal display panel 3 includes an active matrix substrate and a CF substrate that faces the active matrix substrate. On the active matrix substrate, a plurality of TFTs (thin film transistors) are formed. Between the active matrix substrate and the CF substrate, a liquid crystal layer is sealed by use of sealing material.

The following describes in detail a configuration of the backlight 2 provided in the liquid crystal display device 1.

As shown in Fig. 2, the backlight 2 is provided on a back side of the liquid crystal display panel 3 (on a side opposite to a display surface). The backlight 2 includes a plurality of light emitting units 11, a diffuser 8, an optical sheet 9, and a transparent plate 10. For convenience of explanation, the present embodiment explains, as an example, one light emitting unit 11 including one light guide body 7 and another light emitting unit 11 including another light guide body 17. Note that the one light guide body 7 as a typical model of the light guide bodies 7 and 17 is explained as an example, unless specifically noted otherwise.

One light emitting unit 11 includes a light source 5, the light guide body 7 that diffuses light from the light source 5 and causes surface light emission, a substrate 4 on which the light source 5 is provided, a reflective sheet 6, and the like. The light guide body 7 includes a light emitting section 7b including a light emitting surface 7a, and a light guide section 7c for guiding light from the light source 5 to the light emitting section 7b. Another light emitting section 17b of the another light guide body 17 is provided so that the another light emitting section 17b of the another light emitting body 17 comes above the light guide section 7c of the light guide body 7. This forms a flush light emitting surface (a light emitting surface of the entire backlight 2, light emitting area) by use of the plurality of light guide bodies 7, 17, ···. This layout is called a tandem layout.

As described above, the plurality of light emitting units 11 are provided in a tandem layout. Above a structure having this tandem layout, the transparent plate 10, the diffuser 8, and the optical sheet 9 are provided in this order as shown in Fig. 2.

The light guide body 7 is mainly made of transparent resin such as polycarbonate (PC) or polymethylmetacryrate (PMMA). However, a material of the light guide body 7 is not specifically limited. The material of the light guide body 5 is preferably a material whose light transmittance is high. Further, the light guide body 7 can be formed by, for example, injection molding, extrusion molding, thermal-press molding or cutting. Note that a method of forming the light guide body 7 is not limited to the above described methods but may be any processing method providing similar characteristics to those provided by the above described methods.

The reflective sheet 6 is provided so as to be in contact with a back surface of the light guide body 7 (a surface facing the light emitting surface 7a). The diffuser sheet 6 reflects light and causes more light to exit from the light emitting surface 7a. In the present embodiment, a plurality of light guide bodies 7 are provided. For each of the light guide bodies 7, 17, ···, the reflective sheet 6 is provided.

The diffuser 8 is provided so as to cover an entire flush light emitting surface (light emitting area) made of respective light emitting surfaces 7a of the light guide bodies 7, 17, ···. This diffuser 8 is provided so as to face the light emitting surfaces 7a. The diffuser 8 diffuses light emitted from the light emitting surface 7a of the light guide 7 and throws the light onto the optical sheet 9. In the present embodiment, as the diffuser 8, "Panlite PC-9391 50HLW" (manufactured by Teijin Chemicals Ltd.) having a thickness of 2.0 mm is used.

The optical sheet 9 is made of a plurality of sheets provided so as to overlap one another on a front side of the light guide body 7. The optical sheet 9 makes light emitted from the light emitting surface 7a of the light guide body 7 uniform and collects light, so as to supply the light onto the liquid crystal display panel 3. That is, the optical sheet 9 may be a diffusing sheet for diffusing light while collecting the light, a lens sheet for improving a luminance on a front side (a side provided with a liquid crystal display panel) by collecting light, a polarizing reflective sheet for improving a luminance of the liquid crystal display device 1 by reflecting one polarized light component while transmitting another polarized light component. It is preferable that these sheets be used in combination as appropriate, depending on a price and performance of the liquid crystal display device 1. Note that the present embodiment employs, as one example, "LIGHT UP 250GM2" manufactured by Kimoto Co., Ltd. as a diffusing sheet, "Thick RBEF" manufactured by Sumitomo 3M Ltd. as a prism sheet (lens sheet), "DBEF-D400" manufactured by Sumitomo 3M Ltd. as a polarizing sheet (polarization reflective sheet), and the like.

The transparent plate 10 is used in a case where a distance between the light guide body 7 and the diffuser 8 are kept constant and forms a light diffusing area. The transparent plate 10 is made of light-transmitting material such as polyethylene film. Note that it may be configured such that the transparent plate 10 is omitted and the light guide body 7 is provided so as to face the diffuser 8.

In the above configuration, the light emitted from the point light source 5 proceeds within the light guide body 7 while being diffused and reflected, and then exits form the light emitting surface 7a.

Then, after the light emitted from the light emitting surface 7a passes through the transparent plate 10 provided on a front side of the light guide body 7, the light is diffused by the diffusing sheet 8 and the optical sheet 9. As a result, the light is made uniform and collected, and then, thrown onto the liquid crystal panel 3.

Now, the following explains a specific configuration of the light emitting unit 11 constituting the backlight 2, with reference to Figs. 1 to 5.

The light guide body 7 constituting the light emitting unit 11 causes surface light emission from the light emitting surface 7a by use of the light emitted from the light source 5. The light emitting surface 7a is a surface for illuminating an object to be illuminated. In the present embodiment, the light guide bodies 7 have a tandem structure, as shown in Fig. 2. That is, each of the light guide bodies 7 includes the light emitting section 7b having the light emitting surface 7a and the light guide section 7c for guiding the light from the light source 5 to the light emitting section 7b. The light guide bodies 7 are provided so that a light emitting section 17b of one light guide body 17 comes above a light guide section 7c of another light guide body 7. This forms a flush light emitting surface (a light emitting surface of the entire backlight 2, a light emitting area) by use of the plurality of light guide bodies 7, 17, ···.

Fig. 3 shows a planar configuration of the light guide body 7 in the light emitting unit 11. In the light guide body 7 of Fig. 3, a light emitting area (area of the light emitting surface 7a) is shaded. As shown in Fig. 3, in the vicinity of an end section on a side of the light guide section 7c of the light guide body 7, two holes 15 each for disposing a light source are provided. Because these holes 15 each for disposing the light source are provided in the light guide body 7, the light source 5 is engaged in each of the holes 15 as shown in Fig. 2 at the time when the light guide body 7 is provided on the substrate 4 on which the light source 5 is mounted. This allows precise alignment of the light guide body 7 and the light source 5.

Further, as shown in Fig. 2, on a backside of the light guide body 7 (a surface opposite to the light emitting surface 7a), a protrusion 12 is provided. This protrusion 12 is provided on a side provided with the light guide section 7c of the light guide body 7. This configuration reduces an influence of the protrusion 12 onto the light exiting from the light emitting surface 7a. Therefore, a state of light emission from the light emitting surface 7a can be uniform.

In addition, as shown in Fig. 1, as compared to the light emitting section 7b, the light guide section 7c is provided in a position closer to a connecting area A for connection between the light guide body 7 and the substrate 4. If an engaging section (alignment section) B for engaging the protrusion 12 and the through hole 13 is provided in the position closer to the connecting area A, the light guide body 7 is lifted upward to a larger extent in a case where the protrusion 12 of the light guide body 7 is not properly engaged in the through hole 13 of the substrate 4. Accordingly, in the above configuration, it is possible to more easily distinguish a case where a defect in mounting occurs.

Fig. 3 shows a planar configuration at the time when the light guide body 7 is viewed from a surface side (a side of the light emitting surface 7a). A broken line indicates a region where the protrusion 12 is formed. As shown in Fig. 3, the protrusion 12 is provided in the vicinity of an edge section of the light guide body 7 (that is, in a position closer to the edge section than a center section of the light guide body 7). An amount of light traveling within the light guide body 7 is greater in the center section than in the edge section. Therefore, because the protrusion 12 is provided in the position closer to the edge section of the light guide body, an influence of the protrusion 12 on the light traveling within the light guide body can be reduced.

Further, in the light guide body 7, as shown in Fig. 3, a hole 21 (through hole) for connection with the substrate 4 is formed. In this hole 21 for connection, a pin 23 for connection is engaged. This pin 23 is for realizing fixed connection of the light guide body 7 to the substrate 4.

Fig. 4 shows a configuration of a part of the substrate constituting the light emitting unit 11. As shown in Fig. 4, a plurality of light sources 5 are fixedly provided on the substrate 4.

Each of the light sources 5 is a point light source such as a light emitting diode (LED). In the present embodiment, the light sources 5 include a plurality of types of light emitting diodes whose colors of emitted light are different. More specifically, the light sources 5 are a group of LEDs in which a plurality of light emitting diodes of three colors (red (R), green (G), and blue (B)) are disposed in lines. Because the light source is made of these light emitting diodes of three colors, it is possible that the light emitting surface emits white light. However, note that in the backlight of the present invention, the light source does not necessarily include a plurality of types of light emitting diodes whose colors of emitted light are different. For example, the light source may be formed by a plurality of LEDs of one type such as white LEDs, for example.

Note that a combination of colors of the light emitting diodes may be determined as appropriate, depending on color characteristics of an LED of each color and color characteristics of the backlight desired in accordance with a purposed usage of the liquid crystal display device 1. The light sources 5 made of the group of LEDs is mounted on the substrate 4. Note that as the light source 5, it is possible to use a side light emission type LED obtained by molding LED chips of respective colors in one package. This makes it possible to obtain a backlight that can reproduce a wide range of colors. The light sources 5 having the above configuration are fixed and mounted on the substrate 4.

As shown in Fig. 4, in the substrate 4, a through hole (hole) 13 into which the protrusion 12 is engaged is provided in a position corresponding to the protrusion 12 formed on the light guide body 7.

Further, in the substrate 4, a driver (not shown) for controlling lighting of each LED constituting the light source 5 is mounted. The driver is mounted on the substrate 4 together with the light source 5. This makes it possible to reduce the number of substrates and connectors for connecting substrates. Consequently, a cost of the device can be reduced. In addition by reducing the number of substrates, a thickness of the backlight 2 can be reduced.

Furthermore, in the substrate 4, a hole 22 (through hole) for connection with the light guide body 7 is formed. Into this hole 21 for connection, the pin 23 for connection is engaged. This pin 23 is for realizing fixed connection with the light guide body 7.

In addition, in Fig. 4, a position in which one light guide body 7 is disposed is indicated by a broken line. As indicated by the broken line, this position is arranged in a position at which the hole 15 for disposing the light source in the light guide body 7 matches the light source 5 on the substrate 4. The position of the light guide body 7 also is in a position at which the through hole 13 in the substrate 4 matches the protrusion 12 formed on the light guide body 7. In addition, the position of the light guide body 7 also is in a position at which the hole 22 (through hole) for connection in the substrate 4 matches the hole 21 (through hole) for connection in the light guide body 7.

Fig. 5 is a plan view illustrating a configuration of a part of the backlight 2 provided in the liquid crystal display device 1 shown in Fig. 2. As shown in Fig. 5, the backlight 2 is formed by aligning a plurality of light emitting units 11 in vertical and horizontal directions. In Fig. 5, as a configuration of the part of the backlight 2, four light emitting units 11 are arranged in a tandem layout in a vertical direction (x-direction) in Fig. 5 and two light emitting units 11 are arranged in a horizontal direction (y-direction) in Fig. 5. In Fig. 5, hatching is provided to the light emitting surface 7a (light emitting area) of the light guide body 7 (or 17). Types of the hatching is changed between a light emitting surface 7a of one light guide body 7 and another light emitting surface 7a of another light guide body 17 which light emitting surface 7a of the another light emitting body 17 is provided so as to be above a part of the light guide body 7. Note that, in Fig. 5, illustration is omitted in regard to the diffuser 8, the optical sheet 9, and the transparent plate 10.

As is clear from Figs. 2, 5, etc., one substrate 4 is provided for a plurality of light emitting units 11. This configuration allows alignment of the plurality of light emitting units with respect to one substrate. Accordingly, the light emitting units 11 can be aligned relatively to each other more precisely. This makes it possible to improve luminance uniformity of the illumination device. Further, by employing this configuration, the number of substrates can also be reduced.

As described above, in the backlight 2 of the present embodiment, on the backside of the light guide body 7 (a surface facing the substrate 4), the protrusion 12 for alignment with respect to the substrate 4 is provided. Further, in a position corresponding to the protrusion 12, the substrate 4 is provided with the through hole (hole) 13 into which the protrusion 12 is engaged.

Further, as shown in Fig. 1, in corresponding positions of the light guide body 7 and the substrate 4, holes (through holes) 21 and 22 for connection for connecting the light guide body 7 and the substrate 4 are formed. Into these holes for connection (the hole 21 of the light guide body 7 for connection and the hole 22 of the substrate 4 for connection), the pin 23 is engaged. In this way, the light guide body 7 and the substrate 4 are fixedly connected.

As described above, the protrusion 12 for alignment is integrally formed with the light guide body 7. This prevents deterioration in preciseness in alignment of the light guide plate and the substrate. Meanwhile, a configuration for fixedly connecting the substrate 4 and the light guide body 7 includes three parts that are the hole 22 for connection which hole 22 is formed in the substrate 4, the hole 21 for connection which hole 21 is formed in the light guide body 7, and the pin 23. This makes it possible to reliably fix the light guide body 7 on the substrate 4 without causing misalignment.

The backlight 2 of the present embodiment has the above configuration so that alignment of the light guide body and the light source is precisely performed and luminance uniformity is improved.

In addition, in the backlight 2 of the present embodiment, by a well-designed positional relation between the connecting area A for connection between the light source 5 and the light guide body 7 and an alignment section B (engaging section) for alignment between the light source 5 and the light guide body 7, it is possible to easily distinguish a defect in mounting of the light guide body. The following explains this point with reference to (a) and (b) of Fig. 1.
(a) of Fig. 1 is a side view illustrating a configuration of a part of the backlight 2 provided in the liquid crystal display device 1 of the present embodiment. (a) of Fig. 1 shows a state in which one light guide (light guide 17) is defectively mounted.

On the other hand, (b) of Fig. 1 illustrates a configuration of a part of a backlight 102 as a comparative example of the present invention. Similarly to (a) of Fig. 1, (b) of Fig. 1 shows a state in which one light guide body (light guide body 117) is defectively mounted. Further, Fig. 6 illustrates a planar configuration of a light guide body 107 constituting a light emitting unit 11 of the backlight 102 as a comparative example. Fig. 7 illustrates a configuration of a part of a substrate 102 constituting the light emitting unit 11 of the backlight 102 as a comparative example. Fig. 8 illustrates a configuration of a part of the backlight 102 as a comparative example.

In this backlight 102 of the comparative example, members respectively having the same configurations as those of the backlight 2 of the present embodiment are given the same reference signs, respectively.

Fig. 6 illustrates a planar configuration of the light guide body 107 in the light emitting unit 11. In the light guide body 107 of Fig. 6, a light emitting area (an area of a light emitting surface 7a) is shaded. As shown Fig. 6, in the vicinity of an end section of a light guide section 7c of the light guide body 107, two holes 15 for disposing a light source are formed. Further, in the light guide body 107, a hole 21 (through hole) for connection with the substrate 104 is formed. Into this hole 21 for connection, a pin 23 for connection is engaged. The pin 23 is for realizing fixed connection with the substrate 4. A configuration and an arranged position of the hole 15 and the hole 21 for connection are substantially the same as those of the light guide body 7 as shown in Fig. 3.

Meanwhile, a position where a protrusion 112 is provided is different from that of the light guide body 7 shown in Fig. 3. The protrusion 112 is provided farther from the light emitting section 7b of the light guide body 7 than the hole 21 for connection (that is, in a position in a reverse direction of a direction in which the light source 5 emits light, with respect to the hole 21 for connection) on a backside of the light guide body 107 (a side that is opposite to the light emitting surface 7a).

Fig. 7 illustrates a configuration of a part of the substrate 104 constituting the light emitting unit 11. Further, in Fig. 7, a broken line indicates a position in which one light guide body 107 is provided. As shown in Fig. 7, on the substrate 104, a plurality of light sources 5 are fixedly disposed. In the substrate 104, in a position corresponding to the protrusion 112 formed on the light guide body 107, a through hole (hole) 113 into which the protrusion 112 is engaged is provided. Further, in the substrate 104, a hole 22 (through hole) for connection with the light guide body 107 is formed. Into this hole 21 for connection, the pin 23 for connection is engaged. The pin 23 is for realizing fixed connection with the light guide body 107.

Fig. 8 is a plan view illustrating a configuration of a part of the backlight 102. As shown in Fig. 8, the backlight 102 is formed by aligning a plurality of light emitting units 11 in vertical and horizontal directions. In Fig. 8, as a configuration of the part of the backlight 102, four light emitting units 11 are arranged in a tandem layout in a vertical direction (x-direction) in Fig. 8 and two light emitting units 11 are arranged in a horizontal direction (y-direction) in Fig. 8. In Fig. 8, hatching is provided to the light emitting surface 7a (light emitting area) of the light guide body 107 (or 117). Types of the hatching is changed between a light emitting surface 7a of one light guide body 107 and another light emitting surface 7a of another light guide body 117 which light emitting surface 7a of the another light emitting body 17 is provided so as to be above a part of the light guide body 107. Note that, in Fig. 8, illustration is omitted in regard to the diffuser 8, the optical sheet 9, and the transparent plate 10.

In comparisons between (a) of Fig. 1 and (b) of Fig. 1, between Fig. 3 and Fig. 6, between Fig. 4 and Fig. 7, and between Fig. 5 and Fig. 8, the following is found. That is, in the present embodiment, the alignment section B for alignment of the light source 5 and the light guide body 7 is provided closer to the light emitting section 7b of the light guide body 7 than the connecting area A for connecting the light source 5 and the light guide body 7 (that is, in a position in a light emitting direction of the light source 5 with respect to the hole 21 for connection). On the other hand, in the comparative example, an alignment section B is provided farther from the light emitting section 7b of the light guide body 107 than a connecting area A (that is, in a position in a reverse direction of the light emitting direction of the light source 5, with respect to the hole 21 for connection).

As described above, the positions of the alignment sections B are different between the present embodiment and the comparative example. Accordingly, states of the light guide bodies differ between the present embodiment and the comparative example in a case where the light guide bodies are defectively mounted.

In the comparative example, as shown in (b) of Fig. 1, in a case where a defective connection occurs in the vicinity of the alignment section B, the light guide body 117 is lifted upward slightly in the vicinity of the alignment section B and a top end section of the light guide body 117 (end section of the light emitting surface 7a) slightly sinks. However, both the lifting of the light guide body 117 in the vicinity of the alignment section B and the sinking at the end section of the light guide body 117 occur in a small scale. This causes a problem such that it is difficult to distinguish whether or not a defect in mounting occurs.

On the contrary, in the present embodiment, as shown in (a) of Fig. 1, the alignment section B is provided to a position on a top end side of the light guide body 17 (a side closer to the light emitting section 7b) than the connecting section A. Accordingly, if fixation is carried out in a state in which the protrusion 12 is not completely engaged in the through hole 13 of the substrate 4, a top end of the light guide body 17 is lifted upward. This makes it possible to easily recognize an defective mounting state.

In the comparative example, it is difficult to determine whether or not a defect in mounting occurs by visual observation. Therefore, in an assembly process, it is required to perform a lighting test and check as needed whether or not deterioration in luminance occurs due to a defect in mounting. On the other hand, in the present embodiment, without the lighting test, a prompt check of a defect in mounting is possible by visual observation of a state of upward lift of the top end of the light guide body.

In the light emitting unit 11 of the present embodiment, as described above, the light source 5 is fixedly disposed on the substrate 4. Further, in the substrate 4, the through hole 13 into which the protrusion 12 of the light guide body 7 is engaged is provided. This configuration allows precise alignment and disposition of the light guide body 7 on the substrate 4 on which the light source 5 is disposed.

Further, as described above, while the substrate 4 and the light guide body 7 are precisely aligned, the pin 23 for connection is engaged in the holes 21 and 22 of the substrate 4 and the light guide body 7 for connection. Thereby, the substrate 4 and the light guide body 7 are fixed so that no misalignment occurs.

According to the above configuration, misalignment of the substrate 4 and the light guide body 7 can be prevented. Further, a relative positional relation between the light source 5 and the light guide body 7 can be set uniform in the plurality of light emitting units 11. Accordingly, by making a state of light emission of each light emitting unit 11 uniform, it is possible to improve luminance uniformity of the backlight 2.

In addition, in the backlight 2 of the present embodiment, a state in which the light guide body 7 is defectively mounted can be easily distinguished. This reduces a ratio at which manufacturing of a product completes in a state having a defect in mounting. Consequently, a rate of the occurrence of a defect in mounting can be reduced.

Note that in a case where the through hole 13 into which the protrusion 12 is engaged is formed on the substrate 4, a length of the protrusion 12 (a height of the protrusion) provided on the light guide body 7 is preferably greater than a thickness of the substrate 4. For example, the length of the protrusion 12 may be approximately 1.5 times as great as the thickness of the substrate 4. For example, in a case where the thickness of the substrate is 1 mm, the length of the protrusion is preferably 1.5 mm. According to the configuration, in a case where the protrusion of the light guide body is not correctly engaged in the through hole of the substrate, an end of the light guide body is lifted upward to a larger extent. This makes a defect in mounting be visually checked more easily. In addition, in the above configuration, the protrusion of the light guide body becomes difficult to be off from the through hole. Therefore, even if it is forgotten to engage a connection member, the light guide body can be prevented from coming off from the substrate.

Note that the present embodiment explains an example in which in the substrate 4, the through hole 13 is formed as a member for alignment with the light guide body 7. However, the present invention is not limited to this configuration. In the substrate 4, a depression may be provided as a member for alignment.

In a case where a depression for causing the protrusion to engage with the substrate 4 is formed as described above, a length of the protrusion (a height of the protrusion) is preferably smaller than a depth of the depression. This prevents the light guide body from being lifted upward from the substrate in a state where the protrusion of the light guide body is engaged in the depression of the substrate.

The present embodiment raises, as an example, a configuration in which two protrusions 12 for alignment are provided on one light guide body 7. However, the present invention is not limited to this configuration. Note that for more precise alignment of the substrate and the light guide body, it is preferable that a plurality of protrusions 12 be provided to one light guide body.

Further, in the present embodiment, in a connecting area for connection between the light guide body and the substrate, a through hole is formed in each of the light guide body and the substrate. Further, a connection member such as a pin or a screw that is a separate member is engaged in each of the above through holes so that the light guide body and the substrate are connected. However, the present invention is not limited to this configuration. For example, the scope of the present invention encompasses a configuration in which the light guide body and the substrate are connected by use of, for example, adhesive agent or double-sided tape.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

According to the present invention, it is possible to realize an illumination device whose luminance uniformity is improved. An illumination device of the present invention is applicable as a backlight of a liquid crystal display device.

### Reference Signs List

- 1: liquid crystal display device
- 2: backlight (illumination device)
- 3: liquid crystal display panel
- 4: substrate
- 5: light source
- 6: reflective sheet
- 7: light guide body
- 17: light guide body
- 7a: light emitting surface
- 7b: light emitting section
- 7c: light guide section
- 11: light emitting unit
- 12: protrusion
- 13: through hole (hole or depression)
- 21: hole for connection (through hole)
- 22: hole for connection (through hole)
- 23: pin (connection member)
- A: connecting area
- B: alignment section (engaging section)

## Claims

1. An illumination device comprising:
a light source;
a plurality of light emitting units each including a light guide body, the light guide body causing light from the light source to be diffused and emitted from a light emitting surface; and
a substrate on which the light source is fixedly provided, the substrate being connected to the light guide body,
the light guide body being provided in each of the plurality of light emitting units, the light guide body including:
a light emitting section having the light emitting surface; and
a light guide section for guiding the light from the light source to the light emitting section,
the plurality of light emitting units being arranged in lines so that a light emitting section of one light guide body comes above a light guide section of another light guide body adjacent to the one light guide body,
the light guide body having a protrusion for alignment with respect to the substrate, the protrusion being formed on a surface of the light guide body which surface faces the substrate,
the substrate having a hole or depression formed, the protrusion being engaged in the hole or depression at an engaging section,
the engaging section of the protrusion and the hole or depression being provided in a position that is closer to the light emitting section of the light guide body than a connecting area for connection between the light guide body and the substrate.

2. The illumination device as set forth in claim 1, wherein:
in the connecting area for connection between the light guide body and the substrate, the light guide body and the substrate have through holes formed therethrough, respectively; and
the light guide body and the substrate are connected by engaging a connection member for connecting the light guide body and the substrate into the through holes respectively formed in the light guide body and the substrate.

3. The illumination device as set forth in claim 1 or 2, wherein:
a number of the substrate provided for the plurality of light emitting units is one.

4. The illumination device as set forth in any one of claims 1 to 3, wherein:
the protrusion is provided to the light guide section of the light guide body.

5. The illumination device as set forth in any one of claims 1 to 4, wherein:
the protrusion is provided in a position that is closer to an edge section of the light guide body than a center section of the light guide body.

6. The illumination device as set forth in any one of claims 1 to 5, wherein:
the protrusion is plurally provided to one light guide body.

7. The illumination device as set forth in any one of claims 1 to 6, wherein:
the hole is formed in the substrate into which hole the protrusion is engaged; and
the protrusion has a length equal to or greater than a thickness of the substrate.

8. The illumination device as set forth in any one of claims 1 to 6, wherein:
the depression is formed in the substrate into which depression the protrusion is engaged; and
the protrusion has a length smaller than a depth of the depression.

9. The illumination device as set forth in any one of claims 1 to 8, wherein:
the light guide body has a hole into which the light source is engaged, the light source being fixedly provided on the substrate.

10. A liquid crystal display device comprising, as a backlight, the illumination device as set forth in any one of claims 1 to 9.
